# EUROPÄISCHE PATENTSCHRIFT

(11) **EP 1 597 790 B1**
(45) Veröffentlichungstag und Bekanntmachung des Hinweises auf die Patenterteilung: **03.10.2007**
(21) Anmeldenummer: 04712462.3
(22) Anmeldetag: 19.02.2004
(51) Int. Cl.: H01M 8/24, H01M 8/02

(54) **ENDPLATTE FÜR EINEN STAPELN VON BRENNSTOFFZELLEN**
END PLATE FOR A STACK OF FUEL CELLS
PLAQUE D'EXTREMITE DESTINEE A UNE PILE DE CELLULES ELECTROCHIMIQUES

(30) Priorität: 23.02.2003 CH 2832003
(43) Veröffentlichungstag der Anmeldung: 23.11.2005
(73) Patentinhaber: Tribecraft AG, 8045 Zürich (CH)
(72) Erfinder: Evertz Joerg, 8903 Birmensdorf (CH); GUENTHART, Matthias, CH-5000 Aarau (CH); WERNER, Uwe, CH-8904 Birmensdorf (CH)
(86) Internationale Anmeldenummer: PCT/CH2004/000091
(87) Internationale Veröffentlichungsnummer: WO 2004/075330

(56) Entgegenhaltungen:
- DE-A- 10 135 025
- JP-A- 2002 063 930
- US-A- 6 040 072
- US-A- 6 057 053
- PATENT ABSTRACTS OF JAPAN Bd. 1998, Nr. 02, 30. Januar 1998 (1998-01-30) & JP 9 283171 A (ISHIKAWAJIMA HARIMA HEAVY IND CO LTD), 31. Oktober 1997 (1997-10-31)

## Beschreibung

Die vorliegende Erfindung betrifft einen Endplatte für einen Stapel von Brennstoffzellen nach Anspruch 1 sowie eine Druckplatte nach Anspruch 13 bzw eine Auflagerplatte nach Anspruch 14, aus welchen eine erfindungsgemässe Endplatte gebildet werden kann.

Brennstoffzellen bzw. Stapel von Brennstoffzellen sind bekannt. Die einzelne Brennstoffzelle selbst besitzt einen stapelförmigen Aufbau mit einem zwischen ihren Aussenplatten angeordneten Elektrolyten. Zwischen dem Elektrolyten und der einen Aussenplatte befindet sich eine Anode, zwischen dem Elektrolyten und der anderen Aussenplatte eine Kathode. Es sind feste und flüssige Elektrolyten bekannt; je nach dem kann der Elektrolyt von einer Trägerstruktur aufgenommen werden oder selbst die erforderliche Festigkeit besitzen, um in der Brennstoffzelle verbaut werden zu können. Ebenso unterscheiden sich die Betriebstemperaturen erheblich und variieren von Umbebungstemperatur bis zu mehreren Hundert Grad C und darüber.

In einer der vielen bekannten Bauformen, auf welche die Erfindung anwendbar ist, wird in der Brennstoffzelle eine Polymerelektrolyt-Membran (PEM) verwendet. Im Betrieb wird dann der Brennstoffzelle anodenseitig z.B. Wasserstoff in Gasform und kathodenseitg z.B. Sauerstoff enthaltende Umgebungsluft zugeführt.

Vorliegend werden der Einfachheit halber alle Reaktionspartner, die an der chemischen Reaktion in einer Brennstoffzelle teilnehmen, als Brennstoffe bezeichnet, ebenso deren Trägerfluide (z.B. Umgebungsluft als Trägerfluid für den Reaktionspartner O₂). Die Brennstoffe liegen in Fluidform vor. Wie oben bereits erwähnt, existieren zahlreiche Ausführungsformen von Brennstoffzellen mit verschiedensten Brennstoffen, die vorliegend näher dargestellte PEM Brennstoffzelle dient hier nur als Beispiel zur Erläuterung der Verhältnisse.

In der Regel sind in den Aussenplatten der Brenstoffzelle Strukturen vorgesehen, welche als Kanäle für die Durchleitung der Brennstoffe dienen, derart, dass der Elektrolyt bzw. die Membran möglichst gleichmässig über einen möglichst grossen Anteil seiner Fläche mit den Brennstoffen bestrichen wird, was zur gewollten elektrolytischen Reaktion und damit zur Produktion von Strom führt.

Wesentlich ist das Dichtkonzept der Brennstoffzelle, da es bei ungenügender Dichtung zur unkontrollierten Reaktion der sich mischenden Brennstoffe kommt. Bei der PEM Brennstoffzelle mit Wasserstoff und Sauerstoff als Reaktionspartner führt ein Leck zur Knallgasreaktion. In der Regel werden besondere Schnurdichtungen verwendet, um die Brennstoffe zuverlässig in ihren Wirkbereichen zu halten. Andere Dichtkonzepte sind natürlich möglich.

Die einzelne Zelle erzeugt nur eine vergleichsweise geringe Spannung; durch Serieschaltung in einem Stapel kann eine für den vorgesehenen Einsatzzweck adäquate Spannung und damit ausreichende Leistung des Stapels von Brennstoffzellen erreicht werden. Stapel von einhundert oder mehr Brennstoffzellen sind üblich. Heute sind Stapel von PEM Brennstoffzellen mit um die einhundert Zellen, einer Leistung von 7 kw und ca 20 kg Gewicht bekannt.

Im Stapel werden dem Stapel entlanglaufende Kanäle eingesetzt um die einzelnen Brennstoffzellen mit den Brennstoffen zu versorgen. Ebenso wird häufig eine besondere Kühlung vorgesehen, was ebenfalls zu Kanälen für den Kühlmittelfluss zu den einzelnen Brennstoffzellen führt. Zudem sind dann in der einzelnen Brennstoffzelle Kühlkanäle vorzusehen und diese wiederum abgedichtet zu halten.

Es ergibt sich, dass die Medienführung (Brennstoffe, Kühlmittel etc) im Stapel besondere konstruktive Vorkehren verlangt, ebenso das Dichtkonzept. Häufig werden die Kanäle für die Medienzufuhr in die Aussenplatten der einzelnen Brennstoffzelle integriert.

Schliesslich ist zu berücksichtigen, dass die Serieschaltung der Brennstoffzellen im Stapel dazu führt, dass der vom Stapel erzeugte Stromfluss durch ihn selbst hindurchfliesst, d.h. von Brennstoffzelle zu Brennstoffzelle, jeweils durch deren Aussenplatten hindurch, welche direkt oder über Zwischenschichten in Kontakt stehen.

Für die Leistung des Stapels von Brennstoffzellen kritisch wird damit der Kontaktwiderstand der sich berührenden Elemente: Elektroden und Aussenplatten sind in dem oben erwähnten, üblichen Stapel je hundertfach vorhanden, was mehrere Hundert Kontaktflächen mit entsprechendem Kontaktwiderstand ergibt.

Weit verbreitet ist die Fixierung eines Stapels von Brennstoffzellen durch Verklammerung. An den Enden des Stapels vorgesehene Endplatten sind über dem Stapel entlang verlaufende Zuganker miteinander verbunden und üben auf den Stapel Druck aus, welcher die einzelnen Elemente der Brennstoffzellen und diese selbst in ihrer Position im Stapel in Lage hält.

Der benötigte Druck ist erheblich:

Einmal müssen die Brennstoffe unter Druck durch die Brennstoffzelle geführt werden, welcher ohne weiteres zwei bis drei Bar betragen kann.

Dann sind die Dichtungen unter Druck zu halten, was ebenfalls Druck in der genannten Grössenordnung von weiteren zwei bis drei Bar verlangt.

Schliesslich ist der Kontaktwiderstand der Aussenplatten (in der Regel Graphitplatten) direkt abhängig vom Kontaktdruck, was dazu führt, diesen hoch anzusetzen.

Dies führt dazu, das in einem konventionellen Stapel von Brennstoffzellen mit vier bis sechs Zugankern pro Zuganker eine Kraft von 10⁴ N in die Endplatte eingeleitet wird, was zur notwendigen Druckbelastung über die Querschnittsfläche des Stapels von z.B. 100 bis 300 cm² führt.

Diese Druckbelastung soll dabei möglichst gleichförmig sein, da der überwiegende Anteil des Querschnitts des Stapels, d.h. der Oberfläche der Aussenplatten bzw. der Membran der einzelnen Zelle der Führung der Brennstoffe für die elektrochemische Reaktion zur Verfügung steht (stehen muss) wo im wesentlichen gleichförmige Bedingungen vorliegen. In den Randbereichen der Zelle, z.B. bei Aussparungen für die Zuganker oder bei den Kanälen für die Medienführung zu den einzelnen Zellen, können abweichende Bedürfnisse herrschen.

Im Ergebnis wird eine definiert gleichförmige Druckbelastung über den Querschnitt des Stapels von Brennstoffzellen benötigt, so wie sie der Fachmann für die jeweilige konstruktive Ausbildung der Zelle vorsieht. Wie erwähnt wird somit unter "definiert gleichförmiger Druckbelastung" erfindungsgemäss eine durchaus wechselnde Belastung, auch eine Belastung mit Drucksprüngen verstanden, aber unter der Voraussetzung, dass die Belastungswechsel bzw. eventuelle Drucksprünge vom Fachmann gewollt definiert werden, damit jeder Bereich in der Brennstoffzelle optimal mit Druck beaufschlagt ist. Von Spezialanwendungen abgesehen wird es aber so sein, dass nur geringe Belasutngswechsel gewollt sind und von Drucksprüngen abgesehen wird.

Die Randseitig durch die Zuganker in die Endplatte eingeleiteten Verklammerungskräfte führen nun zu deren Durchbiegung gegenüber ihrer Auflagefläche auf dem Stapel, mit der Folge, dass der Stapel im Querschnitt randseitig hoch und mittig nur leicht druckbelastet wird, was der gewollten, definiert gleichförmigen Belastung entgegensteht.

Endplatten werden deshalb oft als massive, schwere Elemente ausgeführt, welche an Panzerplatten erinnern. Insbesondere hohe Gewicht und hoher Materialverbrauch sind unerwünscht, um den Einsatz des Stapels von Brennstoffzellen in mobilen Anwendungen wie z.B. Fahrzeugen, Flugzeugen etc zu ermöglichen oder diesen generell transportabel zu halten.

Im Stand der Technik sind zahlreiche Ausführungsformen von Endplatten bekannt geworden, durch welche bei reduziertem Gewicht bzw. Materialeinsatz die gewünschte definiert gleichförmige Druckbelastung des Stapels von Brennstoffzellen besser erzielt werden kann.

So zeigt WO 95/28010 einen Stapel von Brennstoffzellen mit rechteckigem Querschnitt an dessen einen, gegenüberliegenden Seiten je vier Zuganker angreifen, während an den anderen Seiten zwei Bügel vorgesehen sind, deren Enden ebenfalls von Zugankern belastet sind.

US 6 428 921 zeigt einen Stapel von Brennstoffzellen mit rechteckigem Querschnitt und den Ecken entlang verlaufenden Zugankern, welche auf eine Doppel-Endplatte wirken. Die äussere Platte besitzt Gweindebohrungen, in die Bolzen eingedreht werden können, welche sich dann auf der inneren Platte abstützen. Unter Betriebslast die Durchbiegung der innernen Platte nach aussen verhindert werden, da durch genügendes einschrauben der Bolzen Last im Innenbereich der inneren Platte aufgebracht wird.

US 2002/0110722 zeigt eine Endplatte, an welcher auf deren dem Stapel zugewendeten Seite im inneren Bereich ein Federpaket angeordnet ist, welches auch bei der Durchbiegung der Endplatte unter den über die Zuganker angreifenden Verklammerungskräfte Druckbelastung auf den inneren Bereich des Stapels ausübt.

JP 9-259916 zeigt eine Ausführungsform mit von den Zugankern belasteten, im Innenbereich über die Endplatte verlaufenden Bügeln, welche über lokale Auflager auf die Endplatte wirken.

Durch diese Ausführungsformen wird erreicht, dass die Druckbelastung vermehrt nicht nur in den Randbereichen des Stapels wirkt, sondern ebenfalls im Innenbereich. Eine definiert gleichförmige Belastung ist aber troz Verbesserung der Verhältnisse kaum erreichbar, so dass lokal noch überhöhte Druckkräfte eingesetzt werden müssen, um einen Minimaldruck an den nicht direkt druckbeaufschiagten Orten aufrechtzuerhalten.

US PS 6'040'072 zeigt eine Doppel-Endplatte, deren äussere Platte in der Mitte verdickt und randseitig dünner ausgebildet ist und somit mittig auf der inneren Platte aufliegt. Unter Betriebslast der Zuganker ergibt sich eine Deformation der äusseren Platte derart, dass sie nun über ihre ganze, der inneren Platte zugewendeten Oberflächer auf dieser in einer Ebene aufliegt und damit eine verbesserte Druckbelastung des Stapels ergibt.

Es ist bekannt, die Dickenveränderung der äusseren Platte durch numerische Methoden im Hinblick auf die gewünschte, definierte gleichförmige Druckbelastung zu berechnen. Die heutigen Bearbeitungsmethoden erlauben eine genügend genaue Reproduktion der nicht gleichförmig gekrümmten Oberflächen solcher Endplatten.

Die Krümmung kann z.B. bei einem im Querschnitt rechteckigen Stapel in einer, vorzugsweise aber in zwei (den Seiten des Stapels entsprechenden) Richtungen erfolgen.

Nachteilig ist aber nach wie vor das hohe Gewicht solch einer Endplatte, da die notwendige Dicke erheblich bleibt. Im oben erwähnten Beispiel eines Stapels von 20 kg fällt auf die Endplatten ein Anteil von 2 kg, obschon diese aus Aluminium gefertigt sind. Ebenso ist die genaue Bearbeitung der Oberflächenkontur insbesondere für die Serienproduktion aufwendig.

Durch eine Rippenstruktur wird es möglich, das Gewicht solch einer Endplatte zu vermindern, dabei wächst aber der Bearbeitungsaufwand weiter an. Numerische Berechnungsmodelle führen auf Strukturen, welche bei noch weiter vermindertem Gewicht der gewünschten Druckbelastung des Stapels sehr nahe kommen. Der Herstellungsaufwand solcher Strukturen ist enorm.

Entsprechend ist es die Aufgabe der vorliegenden Erfindung, eine verbesserte Endplatte für einen Stapel von Brennstoffzellen zu schaffen, welche unter Betriebslast eine definiert gleichförmige Druckbelastung des Stapels erlaubt.

Diese Aufgabe wird gelöst durch eine Endplatte nach Anspruch 1 bzw. durch eine Druckplatte nach Anspruch 13 und eine Auflagerplatte nach Anspruch 14.

Der gegen den Stapel hin gewölbte Druckschild erlaubt, die an den Krafteinleitungsstellen angreifenden Verklammerungskräfte definiert gleichförmig in die Mittel zur Übertragung des Drucks auf den angrenzenden Stapel einzuleiten. Dadurch entfallen Konstruktionen mit Querbügeln, Federpaketen etc; ebenso entfällt die Notwendigkeit einer massiven, dicken Endplatte mit grossem Gewicht und erheblichem Fertigungsaufwand für die Bearbeitung einer speziell gekrümmten Oberfläche, welche sich unter Last eben an den Stapel anlegt.

Ueber die gestellte Aufgabe hinaus kann die Schildwölbung dabei vom Fachmann über bekannte rechnerische Methoden wahlweise derart gewählt werden, dass der Schild selbst durch die von den weiteren Mitteln zur Übertragung des Drucks ausgeübten Reaktionskräfte im wesentlichen nur auf Druck beansprucht wird. Damit werden geringe Anforderungen an die Steifigkeit des Druckschilds gestellt, was erlaubt, ihn entsprechend dünn auszubilden. Auf diese Weise kann eine besonders leichte Endplatte realisiert werden.

Die Mittel zur vorbestimmten Stabilisierung der Schildwölbung unter Last verhindern eine Aufweitung des Schilds bzw. Deformation der Schildwölbung derart, dass eine andere Beanspruchung, z.B. durch Schub, entsteht, mit der Folge, dass der Schildbereich dann entsprechend dicker dimensioniert werden müsste. Erfindungsgemäss bleibt der Schild unter grösster Belastung durch die Verklammerungskräfte einerseits und die Druckbelastung durch die weiteren Mittel zur Übertragung des Drucks stabil.

Die weiteren Mittel wirken als Uebergangsmittel vom gekrümmten Druckschild zum nächsten und ebenen Element des zu fixierenden Staples von Brennstoffzellen und übertragen auf dieses nur die gewünschten Druckkräfte.

Besonders vorteilhaft ist eine Ausführungsform einer zweiteiligen Endplatte nach Anspruch 9. Die Druckplatte kann als Stranggussprofil aus Aluminium mit einem D-förmigen Querschnitt hergestellt werden, wobei der gekrümmte Bauch des D dem Druckschild und der gerade Rücken des D der Zugplatte entspricht. Das Gewicht solche einer Struktur ist vorteilhaft tief; der Einsatz von Stranggussprofilen in der Serienproduktion günstig. Die Auflagerplatte wird dann mit einem Satz von Rippen versehen, welche auf der einen Seite als Negativ an den Bauch des D anschliessen und auf der anderen Seite parallel zum Rücken des D die Anschlussfläche an das erste Element des Stapels bilden. Gewicht und Herstellkosten sind ebenso günstig wie bei der Druckplatte.

Bei einer Ausführungsform nach Anspruch 10 ist ein Spalt zwischen den zusammenwirkenden Oberflächen von Druckschild und Auflagerplatte vorgesehen, welcher von einer Berührungsstelle ausgehend sich nach aussen verbreitert. Dadurch ist eine vorbestimmte Deformation des Druckschilds möglich, was die definiert gleichförmige Druckübertragung des Druckschilds auf die Auflagerplatte unterstützt. Bei solch einer Optimierung wird berücksichtigt, dass kein Bauteil absolut starr ist und damit die stets stattfindende elastische Deformation gezielt genutzt. Vorzugsweise wird der Fachmann diesen Spalt so auslegen, dass sich der Druckschild unter Betriebslast gewissermssen in die Auflagerplatte hineinwälzt und dann, in lastdeformierter Lage, nur unter Druckbeanspruchung steht.

Eine Druckplatte nach Anspruch 13 kann mit einer beliebig ausgebildeten Auflagerplatte kombiniert werden, sofern letztere in der Art des Negativs an den Druckschild anschliesst.

Eine Auflagerplatte nach Anspruch 14 kann mit einer beliebig ausgebildeten Druckplatte kombiniert werden, sofern letztere in der Art des Positivs an sie anschliesst.

Besondere Ausführungsformen werden nachstehend anhand der Figuren näher beschreiben.

Es zeigt:
Fig 1 schematisch aus perspektivischer Ansicht einen Stapel von Brennstoffzellen, versehen mit erfindungsgemässen Endplatten,
Fig 2 schematisch aus perspektivischer Ansicht eine erfindungsgemässe Druclcplatte,
Fig 3 schematisch aus perspektivischer Ansicht eine erfindungsgemässe Auflagerplatte,
Fig 4 schematisch eine erfindungsgemässe Druckplatte mit mehreren Segmenten,
Fig 5 schematisch eine in zwei Richtungen gekrümmte Druckplatte gemäss der vorliegenden Erfindung, und
Fig 6 schematisch eine rotationssymmetrische Endplatte mit entsprechender Auflagerplatte.

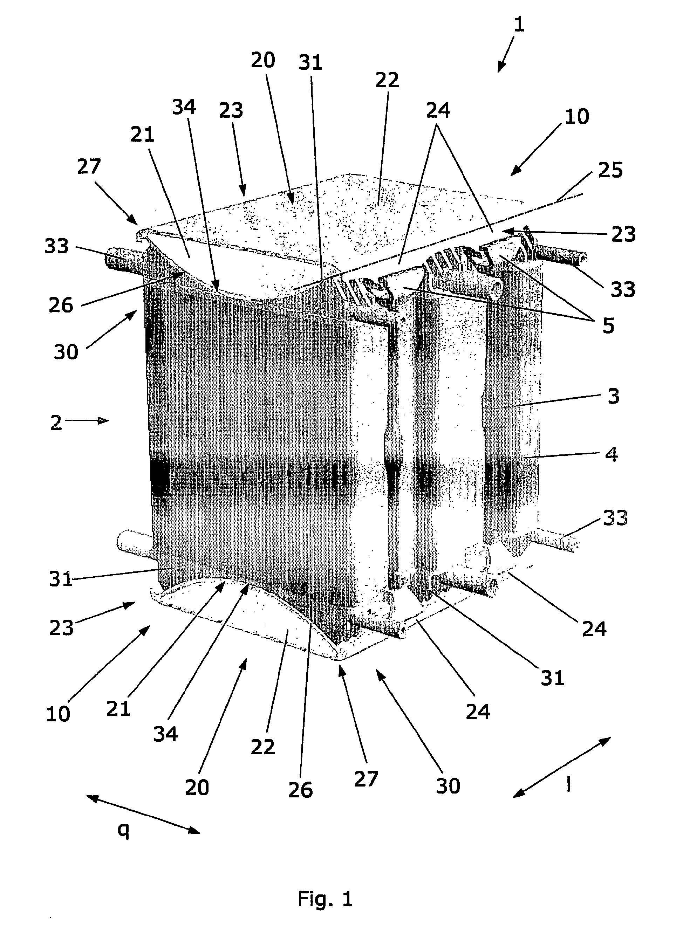

Fig 1 zeigt einen rechteckigen Stapel 1 von Brennstoffzellen, mit rechteckigen Endplatten 10 und aufeinandergestapelten Brennstoffzellen 2, welche über die Enplatten 10 miteinander verklammert sind. Zuganker 3 verbinden die Endplatten 10 miteinander und sind über nicht dargestellte Gewinde mit Hilfe eines Verspannglieds 4 verspannbar, so dass die Zuganker 3 die Kräfte zur Verklammerung des Stapels 1 in die Endplatten einleiten.

Solch ein Layout ist grundsätzlich bekannt.

Erfindungsgemäss sind die Endplatten 10 zweiteilig ausgeführt; es ist jeweils eine Druckplatte 20 und eine Auflagerplatte 30 vorgesehen.

Die Druckplatte 20 besitzt einen Druckschild 21 sowie ein Zugelement als Mittel zur vorbestimmten Stabilisierung der Schildwölbung unter Last, welches hier als Zugplatte 22 ausgebildet ist. Druckschild 21 und Zugplatte 22 sind an ihren jeweiligen, einander gegenüberliegenden Randbereichen 23 miteinander verbunden. In den Randbereichen 23 liegen die Krafteinleitungsstellen 24 der Zuganker 3. Die Ebene der Zugplatte 22 schneidet sich mit dem Druckschild 21 im einer geraden, strichpunktiert angedeuteten Schnittlinie 25. Vorzugsweise liegen die Krafteinleitungsstellen 24 auf oder so nahe wie möglich bei den Schnittlinien 25, was unter Betriebslast die Beanspruchung der Druckplatte 20 minimiert und erlaubt, diese materialsparend auszuführen.

Der Druckschild 21 ist in einer Richtung (hier in Querrichtung q des Stapels 1) gegen die Auflagerplatte gewölbt und besitzt (in Längsrichtung I des Stapels 1 verlaufende) paralle Mantellinien, welche ihrerseits zu den Randbereichen 23 parallel verlaufen. Im Querschnitt besitzt die Druckplatte 20 ein D-förmiges Profil.

Mit seiner konvexen Seite 26 liegt der Druckschild unter Betriebslast wie in einer Negativform auf der entsprechend ausgebildeten Auflagerplatte 30 auf, während auf seiner Konkavseite 27 die Zugplatte 22 (in den Randbereichen 23) angreift.

Durch die konvexe Schildwölbung übt der Druckschild 21 eine definiert gleichförmige Drucklast auf die Auflagerplatte 30 aus, die durch diesen an eine an ihn angrenzende Brennstoffzelle 2 (oder an ein anderes, angrenzendes Element des Stapels 1) weitergeleitet wird. Damit stehen die Brennstoffzellen 2 unter der gewünschten, definiert gleichförmigen Last. Die Zugplatte 22 stabilisiert die Schildwölbung unter Last, indem sie am Druckschild 21 in dessen Randbereichen 23 angreift und diesen so fixiert.

Die Auflagerplatte 30 besizt Druckrippen 31 mit Aussenflächen 34, wobei die Druckrippen 31 senkrecht vom Druckschild 21 abstehen und über ihre Aussenflächen 34 die Negativform bilden, auf welcher der Druckschild 21 aufliegt. Die Druckrippen 31 nehmen damit die Betriebslast des Druckschilds 21 auf und sind vorliegend über eine Grundplatte 32 miteinander verbunden; letztere wiederum liegt auf dem angrenzenden Element bzw, einer angrenzenden Brennstoffzelle 2 des Stapels 2 auf. Die Grundplatte 32 hält die Druckrippen 31 in Position, welche wiederum die Betriebslast vom Druckschild 21 in den Stapel 1 einleiten.

Weiter dargestellt sind Medienführungskanäle 33, welche die dem Stapel 1 entlang verlaufenden in der Figur nicht dargestellten Versorgungskanäle für Brennstoffe, Kühlmittel etc mit der Aussenwelt verbinden. Dem Stapel 1 entlang verlaufende Versorgungskanäle zur Speisung der einzelnen Brennstoffzellen 2 sind bekannt. Vorteilhaft ist, dass unter Einsatz der erfindungsgemässen Auflagerplatte 30 ein spezielles Element zur Verbindung der Versorgungskanäle mit der Aussenwelt eingespart werden kann.

Die Wölbung des Druckschilds ist durch den Fachmann berechenbar und wird in Abhängigkeit der gewünschten, definiert gleichförmigen Druckbelastung der Brennstoffzellen 2 bestimmt. Da sich jede Struktur unter Last elastisch deformiert, ist es vorteilhaft, die Krümmung des Druckschilds 21 etwas stärker zu wählen als die Krümmung der Aussenflächen 34 der Druckrippen 31. Damit liegt (ohne Betriebslast) der Druckschild 21 mittig in den Auflageflächen 34 auf, schmiegt sich aber unter Betrieblast vorbestimmt aufweitbar vollständig und definiert gleichförmig an die Aussenflächen 34 der Druckrippen 31 an, mit der Konsequenz, dass die berechnete Drucklastverteilung auch unter realen Bedingungen eintritt. Diese Deformation lässt sich durch den Fachmann ebenfalls berechnen, einschlieslich der Deformation der Zugplatte 22.

Ensprechend der Wölbung des Druckschilds 21 in nur einer Richtung, der Querrichtung q, ist eine definiert gleichförmige Druckbelastung in Längsrichtung 1 nicht gegeben. Diesere Nachteil ist nur scheinbar vorhanden:

Einmal können die Zuganker 3 nun von den Ecken des Stapels 1 mehr zur Mitte seiner Längsseite versetzt angeordnet werden, so dass die unerwünschten Belastungsunterschiede kleiner werden.

Dann können Zuganker 3 in einer beliebigen Anzahl vorgesehen werden, die Belastungsunterschiede somit vorbestimmt reduziert werden.

Schliesslich kann die Auflagerplatte 30 in ihren Abmessungen angepasst werden: Unter Betriebslast, aufgebracht an den Krafteinleitungsstellen 24, verformt sich die Endplatte 30 wellenförmig den die Krafteinleitungsstellen 24 enthaltenden Randbereichen 23 entlang. Diese Derormation kann gerechnet und dann negativ gesetzt werden. Mit anderen Worten wird eine negativ wellenförmige Auflagerplatte hergestellt, welche sich dann unter Betriebslast eben verformt.

Damit wird durch den erfindungsgemäss in nur einer richtung gekrümmten Druckschild erreicht, dass die definiert gleichförmige Druckbelastung über die ganze Querschnittsfläche des Stapels 1 gegeben ist.

Für die Serieproduktion eines Stapels 1 von Brennstoffzellen ist es vorteilhaft, die Druckplatte 20 aus einem Stranggussprofil herzustellen. Die Auflagerplatte 30 ist mit ihren senkrecht zur Grundplatte 32 angeordneten Druckrippen 31 ebenfalls leicht herzustellen. Die dadurch gebildete Endplatte 10 verfügt erfindungsgemäss über geringes Gewicht mit tiefen Herstellkosten.

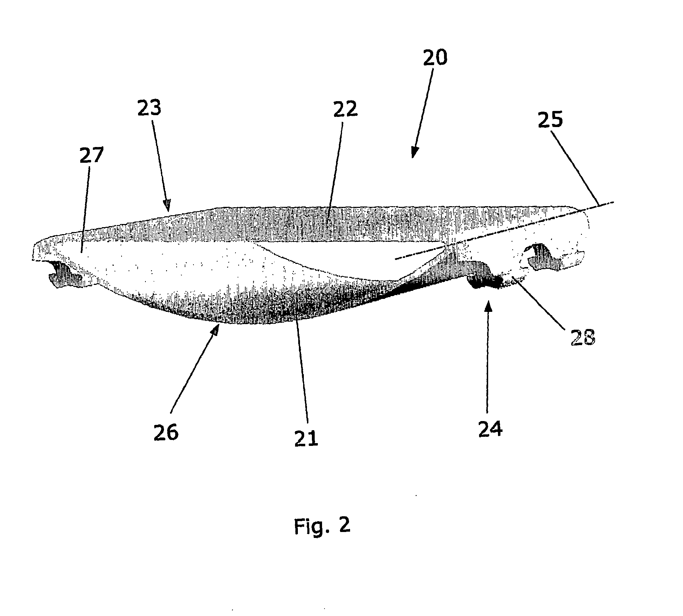

Fig 2 zeigt eine erfindungsgemässe Druckplatte 20 in perspektivischer Ansicht. Dargestellt sind die Krafteinleitungsstellen 24 für die Zuganker 3, welche über deren zangenartig ausgebildeten Greifer 5 (Fig 1) an entsprechend ausgebildeten Gegenstücken 28 der Druckplatte 20 angreifen. Solche Gegenstücke können im Stranggussverfahren leicht am Stranggussprofil angeformt werden.

Druckplatte 20 und Auflagerplatte 30 sind im Betrieb kraftschlüssig miteinander verbunden; werden die Greifer 5 und die Gegenstücke 28 geeignet ausgebildet, umfassen die Greifer die Auflagerplatte 30 seitlich, was nebend dem Kraftschluss auch einen Formschluss der Platten (20,30) ergibt und die beiden Platten zu einem Paket, der Endplatte 10, verbindet.

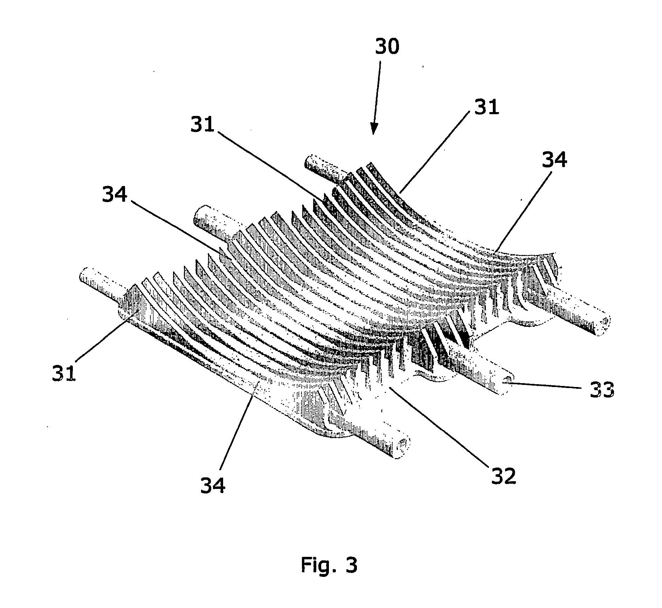

Fig 3 zeigt eine erfindungsgemässe Auflagerplatte 30 in perspektivischer Ansicht. Dargestellt sind die Grundplatte 32 mit den Druckrippen 31 und ihren Aussenflächen 34, auf welchen der Druckschild 21 zur Anlage kommt. Weiter dargestellt sind die Medienführungskanäle 33, welche am Medien seitlich in die Auflagerplatte 30 hineinführen und dann rechtwinklig nach unten, in den Stapel 1, hineinleiten.

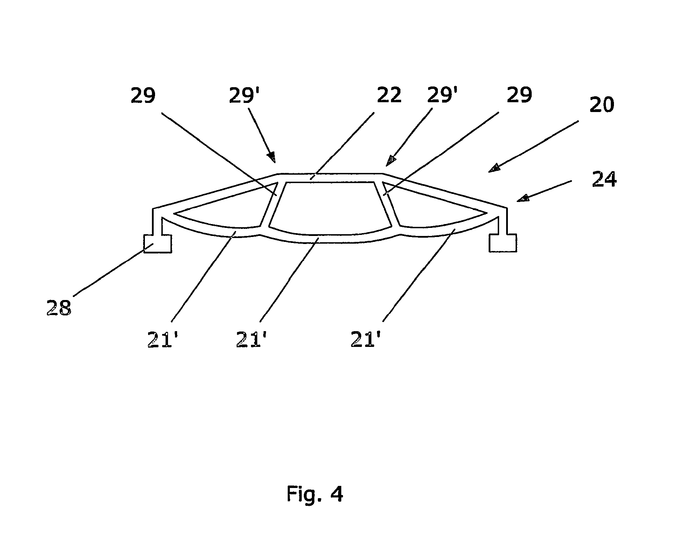

Fig 4 zeigt schematisch eine erfindungsgemässe Druckplatte mit mehreren Segmenten. Querstege 29 unterteilen den Druckschild 21 in mehrere Segmente 21'. Dadurch wird unter Betriebslast jedes Segment 21' in der selben Art belastet, wie der Schild 21 (Fig 2). Dadurch entstehen voneinander getrennte Hohlräume in der Druckplatte, mit dem Vorteil, dass diese z.B. für die Medienführung nutzbar wird. Weiter ist bei der Unterteilung des Druckschilds 21 in Segmente 21' vorteilhaft, dass sich die Bauhöhe sowohl der Druckplatte 20 wie auch der Auflagerplatte 30 verringert.

Die Verwendung von Querstegen 29 führt am Ort der Verbindung mit der Zugplatte 22 zu einem in dieser liegenden Knick 29', damit sich die Kräfte am Ort der Verbindung zu Null addieren, so dass die Zugplatte nach wie vor im wesentlichen nur Zugkräften ausgesetzt ist.

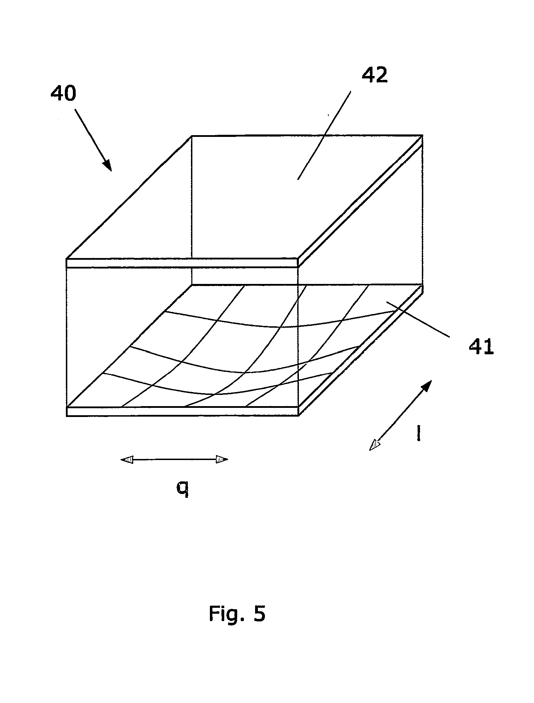

Fig 5 zeigt schematisch eine in zwei Richtungen gekrümmte Druckplatte 40 mit einem Druckschild 41 und einer Zugplatte 42; damit lässt sich in Längsrichtung I und in Querrichtung q eine definiert gleichförmige Druckbelastung der Brennstoffzellen 2 erzielen. Die Zugplatte 41 lässt sich durch konventionelle mechanisch in der Figur nicht dargestellte Mittel wie einer Verschraubung oder einer Verklebung etc etc auf dem Druckschild 41 festlegen. Die Krümmung des Druckschilds 41 kann durch den Fachmann numerisch ermittelt werden.

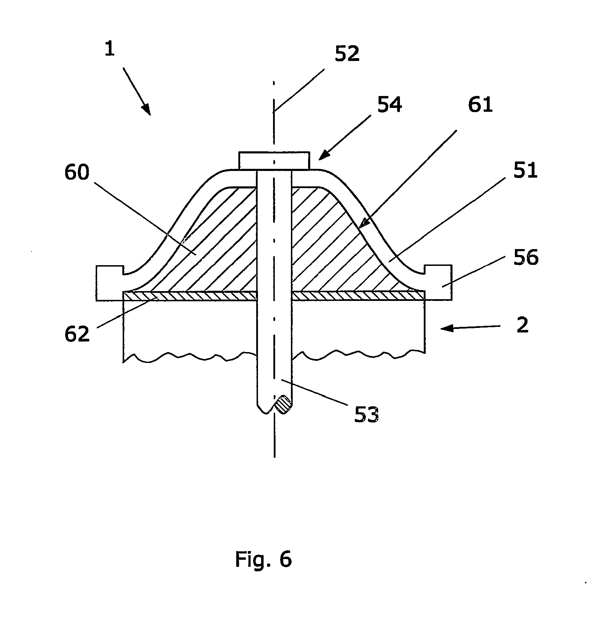

Fig 6 zeigt schematisch einen Querschnitt durch eine rotationssymmetrische Endplatte 50 gemäss der vorliegenden Erfindung. Ein Druckschild 51 ist rotationssymmetrisch ausgebildet und besitzt eine Symmetrieachse 52. Der Druckschild 51 wird durch einen einzigen, in der Symmetrieachse 52 liegenden Zuganker 53 am Ort der Krafteinleitungsstelle 54 belastet. Mittel zur vorbestimmten Stabilisierung der Schildwölbung sind als an den Druckschild 51 angeformter Spannring 56 ausgebildet.

Druckrippen 60 mit Auflageflächen 61 für den Druckschild leiten über eine Grundplatte 62 die Druckbelastung in die angrenzenden Brennstoffzellen 2 des Stapels 1.

Die Endplatte 50 kann aus einer Druckplatte, bestehend aus dem Druckschild 51, dem Spannring 56 und und der Krafteinleitungsstelle 54 sowie einer Auflagerplatte mit den Druckrippen 60 und der Grundplatte 62 bestehen. In der Figur ist eine einstückige Ausführung der Endplatte 50 dargestellt; opitonal kann die Grundplatte 62 dann weggelassen werden.

Es ist aus der Figur ersichtlich, dass die Symmetrieachse 52 mit der Symmetrieachse der gestapelten Brennstoffzellen 2 zusammenfällt.

Ebenso ist es möglich, die Endplatte 10 (Fig 1) einstückig auszubilden, wobei dannebenfalls die Grundplatte 32 optional weggelassen werden kann. Vorteilhafterweise werden dann die Druckrippen 31 in ihrer Länge zwischen Druckschild 21 und angrenzendem Element des Stapels 1 so ausgebildet, dass ohne Betriebslast die Druckrippen das angrenzende Element des Stapels 1 nur mittig berühren, aber randseitig einen Abstand aufweisen. Dieser Abstand wird vom Fachmann so bemessen, dass er unter Betriebslast zu Null wird. Dadurch legen sich die Druckrippen unter Betriebslast eben an dem angrenzenden Element des Stapels 1 an; es wird die gewünschte, definiert gleichförmige Drucklast in den Stapel 1 eingeleitet.

## Patentansprüche

1. Endplatte für einen Stapel von Brennstoffzellen mit mindestens einer Krafteinleitungsstelle (24, 54) für Kräfte zur Verklammerung des Stapels (1), **gekennzeichnet durch** einen sich im wesentlichen über ihre gesamte Querschnittsfläche erstreckenden, mit der mindestens einen Krafteinleitungsstelle (24, 54) betriebsfähig verbundenen, in mindestens einer Richtung gegen den Stapel (1) hin gewölbten Druckschild (21), Mittel zur vorbestimmten Stabilisierung der Schildwölbung unter Last und mit auf dessen Konvexseite (26) angeordneten am Stapel (1) abstützbaren weiteren Mitteln zur Uebertragung von **durch** den Schild (21) ausgeübtem, definiert gleichförmigem Druck auf den angrenzenden Stapel (1).

2. Endplatte nach Anspruch 1, **dadurch gekennzeichnet, dass** die Mittel zur Stabilisierung der Schildwölbung als an den Randbereichen (23) des Schilds (21) angreifendes, die Randbereiche (23) unter Betriebslast des Schilds (21) im vorbestimmten gegenseitigem Abstand stabilisierendes Zugelement (22,56) ausgebildet sind.

3. Endplatte nach der Anspruche 1 oder 2, **dadurch gekennzeichnet, dass** die weiteren Mittel senkrecht zur Schildoberfläche angeordnete Druckrippen (31) zur Aufnahme der Betreibslast des Schilds (21) aufweisen.

4. Endplatte nach einem oder mehreren der Ansprüche 1 bis 3 mit mehreren Krafteinleitungsstellen (24) für Kräfte zur Verklammerung des Stapels, **dadurch gekennzeichnet, dass** die Krafteinleitungsstellen (24) an den Randbereichen (23) des Schilds angeordnet sind.

5. Endplatte nach einem oder mehreren der Ansprüche 1 bis 3, **dadurch gekennzeichnet, dass** eine Krafteinleitungsstelle (54) für Kräfte zur Verklammerung des Stapels (1) vorgesehen und der Schild (51) symmetrisch oder rotationsymmetrisch zu einer sekrecht durch die Endplatte verlaufenden, mit einer Längsachse des Stapels (1) zusammenfallenden Symmetrieachse (52) ausgebildet ist, wobei die Krafteinleitungsstelle (54) auf der Symmetrieachse (52) liegt und die Randbereiche des Schilds der Peripherie der Endplatte entlang verlaufen und durch ein auf die Randbereiche wirkendes, als Spannring (56) ausgebildetes Zugelement stabilisiert sind.

6. Endplatte nach einem oder mehreren der Ansprüche 1 bis 5, **dadurch gekennzeichnet, dass** sie zweiteilig, bestehend aus einer Druckplatte (20) und einer Auflagerplatte (30) ausgebildet ist, und die Druckplatte (20) die mindestens eine Krafteinleitungsstelle (24) für die Kräfte zur Verklammerung des Stapels (1) sowie den Druckschild (21) aufweist, wobei Druckplatte (20) und Auflagerplatte (30) zum betriebsfähigen Zusammenwirken über Kraft- und/oder Formschluss ausgebildet sind.

7. Rechteckige Endplatte nach einem oder mehreren der Ansprüche 1 bis 6 für einen im Querschnitt rechteckigen Stapel von Brennstoffzellen (2), **dadurch gekennzeichnet, dass** der Druckschild (21) in nur einer Richtung gewölbt ist und zueinander sowie zu zwei gegenüberliegenden Randbereichen (23) der Endplatte parallele Mantellinien aufweist, wobei die entsprechenden Randbereiche (23) der Endplatte und des Schilds (21) je zusammenfallen und die Krafteinleitungsstellen (24) aufweisen.

8. Rechteckige Endplatte nach Anspruch 7, **dadurch gekennzeichnet, dass** das stabilisierende Zugelement die Randbereiche (23) des Schilds miteinander verbindet und vorzugsweise als sich über die gesamte Länge der verbundenen Randbereiche erstreckende Zugplatte (22) ausgebildet ist.

9. Rechteckige Endplatte nach einem der Ansprüche 7 oder 8, **dadurch gekennzeichnet, dass** die Druckplatte (20) als im Querschnitt im wesentlichen D-förmiges Stranggussprofil, vorzugsweise aus Aluminium, ausgebildet ist.

10. Endplatte nach einem der Ansprüche 5 bis 9, **dadurch gekennzeichnet, dass** sich die Krümmungen der miteinander zusammenwirkenden Oberflächen von Schild (21) und Auflagerplatte (30) vorbestimmt unterscheiden, wobei die wirksame Oberfläche des Schilds (21) stärker gekrümmt ist als die entsprechende Oberfläche der Auflagerplatte (30), derart, dass die wirksame Oberfläche des Schilds (21) unter Betriebslast vorbestimmt aufweitbar und definiert gleichförmig an die gesammte entsprechende Oberfläche der Auflagerplatte (30) anpressbar ist.

11. Endplatte nach einem der Ansprüche 1 bis 10, **dadurch gekennzeichnet, dass** die weiteren Mittel Kanäle für die Medienführung aufweisen.

12. Endplatte nach einem der Ansprüche 1 bis 11, **dadurch gekennzeichnet, dass** der Druckschild (21) segmentweise aufgebaut ist.

13. Druckplatte für einen Stapel von Brennstoffzellen (2) zum betriebsfähigen Zusammenwirken mit einer Auflagerplatte (30) **gekennzeichnet durch** mit mindestens eineKrafteinleitungsstelle (24,54) für Kräfte zur Verklammerung des Stapels (1) und **durch** einen sich im wesentlichen über ihre gesamte Fläche erstreckenden, mit der mindestens einen Krafteinleitungsstelle (24,54) betriebsfähig verbundenen, in mindestens einer Richtung gegen eine Auflagerplatte (30) hin gewölbten Druckschild (21) sowie Mittel zur vorbestimmten Stabilisierung der Schildwölbung unter Last.

14. Auflagerplatte für eine Druckplatte eines Stapels von Brennstoffzellen **gekennzeichnet durch** Druckrippen (31) zur Aufnahme der Betriebslast eines Druckschilds (21) über Anlage ihrer Aussenflächen (34) an die Schildwölbung und **durch** eine, den Aussenseiten der Druckrippen (31) abgewandt gegenüberliegende, ebene Auflagefläche zur Abstützung an einem anschliessenden Element des Stapels von Brennstoffzellen.

15. Auflagerplatte nach Anspruch 14, **gekennzeichnet durch** Kanäle (33) für die Führung der Medien eines Stapels von Brennstoffzellen.

## Claims

1. An end plate for a stack of fuel cells, having at least one force introduction location (24, 54) for forces for clamping the stack (1), **characterized by** a pressure shield (21), which extends substantially over its entire cross-sectional area, is operationally connected to the at least one force introduction location (24, 54), and is curved convexly in at least one direction toward the stack (1), means for the predetermined stabilizing of the shield convexity under load, and having further means, which are arranged on its convex side (26) and can be supported on the stack (1), for transmitting defined, uniform pressure exerted by the shield (21) to the adjoining stack (1).

2. The end plate as claimed in claim 1, **characterized in that** the means for stabilizing the shield convexity are designed as a tension element (22, 56) which engages on the edge regions (23) of the shield (21) and stabilizes the edge regions (23) at the predetermined distance from one another under the operating load of the shield (21).

3. The end plate as claimed in claim 1 or 2, **characterized in that** the further means have pressure fins (31), arranged perpendicular to the shield surface, for absorbing the operating load of the shield (21).

4. The end plate as claimed in one or more of claims 1 to 3, having a plurality of force introduction locations (24) for forces for clamping the stack, **characterized in that** the force introduction locations (24) are arranged at the edge regions (23) of the shield.

5. The end plate as claimed in one or more of claims 1 to 3, **characterized in that** one force introduction location (54) for forces for clamping the stack (1) is provided, and the shield (51) is formed symmetrically or rotationally symmetrically with respect to an axis of symmetry (52) which runs perpendicularly through the end plate and coincides with a longitudinal axis of the stack (1), the force introduction location (54) lying on the axis of symmetry (52), and the edge regions of the shield running along the periphery of the end plate and being stabilized by a tension element which acts on the edge regions and is designed as a clamping ring (56).

6. The end plate as claimed in one or more of claims 1 to 5, **characterized in that** it is of two-part design, comprising a pressure plate (20) and a bearing plate (30), and the pressure plate (20) includes the at least one force introduction location (24) for the forces for clamping the stack (1) as well as the pressure shield (21), the pressure plate (20) and bearing plate (30) being designed for operational interaction by nonpositive and/or positive locking.

7. A rectangular end plate as claimed in one or more of claims 1 to 6 for a stack of fuel cells (2) which is rectangular in cross section, **characterized in that** the pressure shield (21) is convex in only one direction and has surface lines which are parallel to one another and to two opposite edge regions (23) of the end plate, the corresponding edge regions (23) of the end plate and of the shield (21) in each case coinciding and having the force introduction locations (24).

8. The rectangular end plate as claimed in claim 7, **characterized in that** the stabilizing tension element connects the edge regions (23) of the shield to one another and is preferably designed as a tension plate (22) which extends over the entire length of the connected edge regions.

9. The rectangular end plate as claimed in one of claims 7 or 8, **characterized in that** the pressure plate (20) is designed as an extruded section, preferably of aluminum, which is substantially D-shaped in cross section.

10. The end plate as claimed in one of claims 5 to 9, **characterized in that** the curvatures of the surfaces of shield (21) and bearing plate (30) which interact with one another differ in a predetermined way, with the active surface of the shield (21) being curved to a greater extent that the corresponding surface of the bearing plate (30), in such a manner that the active surface of the shield (21), under operating load, can be widened in a predetermined way and can be pressed in a defined, uniform way against the entire corresponding surface of the bearing plate (30).

11. The end plate as claimed in one of claims 1 to 10, **characterized in that** the further means have passages for carrying media.

12. The end plate as claimed in one of claims 1 to 11, **characterized in that** the pressure shield (21) is of segmented construction.

13. A pressure plate for a stack of fuel cells (2) for operational interaction with a bearing plate (30), **characterized by** at least one force introduction location (24, 54) for forces for clamping the stack (1) and by a pressure shield (21), which extends substantially over its entire surface, is operationally connected to the at least one force introduction location (24, 54) and is convexly curved in at least one direction toward a bearing plate (30), and by means for the predetermined stabilization of the shield convexity under load.

14. A bearing plate for a pressure plate of a stack of fuel cells, **characterized by** pressure fins (31) for absorbing the operating load of a pressure shield (21) by way of the outer surfaces (34) thereof bearing against the shield convexity, and by a planar bearing surface, which is on the opposite side remote from the outer sides of the pressure fins (31), to provide support against an adjoining element of the stack of fuel cells.

15. The bearing plate as claimed in claim 14, **characterized by** passages (33) for carrying the media of a stack of fuel cells.

## Revendications

1. Plaque d'extrémité pour pile de cellules à combustible, qui présente au moins un emplacement (24, 54) d'application des forces de serrage de la pile (1), **caractérisée par** un écran de poussée (21) qui s'étend essentiellement sur toute la surface de sa section transversale, reliée fonctionnellement à l'emplacement ou aux emplacements (24, 54) d'application de forces et cintrée vers la pile (1) dans au moins une direction, des moyens pour stabiliser de manière prédéterminée le cintrage de l'écran en charge et d'autres moyens qui peuvent s'appuyer sur la pile et disposés sur son côté convexe (26) pour transférer sur la pile adjacente (1) la poussée uniforme définie exercée par l'écran (21).

2. Plaque d'extrémité selon la revendication 1, **caractérisée en ce que** les moyens de stabilisation du cintrage de l'écran sont configurés sous la forme d'un élément de traction (22, 56) qui s'engage sur les bordures (23) de l'écran (21) et qui stabilise à la distance mutuelle prédéterminée les bordures (23) sous la charge de fonctionnement de l'écran (21).

3. Plaque d'extrémité selon les revendications 1 ou 2, **caractérisée en ce que** les autres moyens présentent des nervures de poussée (31) disposées perpendiculairement à la surface de l'écran, pour la reprise de la charge de fonctionnement de l'écran (21).

4. Plaque d'extrémité selon l'une ou plusieurs des revendications 1 à 3, qui présente plusieurs emplacements (24) d'application des forces de serrage de la pile, **caractérisée en ce que** les emplacements (24) d'application des forces sont disposés sur les bordures (23) de l'écran.

5. Plaque d'extrémité selon l'une ou plusieurs des revendications 1 à 3, **caractérisée en ce qu'**un emplacement (54) d'application des forces de serrage de la pile (1) est prévu et **en ce que** l'écran (51) a une configuration symétrique ou symétrique en rotation par rapport à un axe de symétrie (52) qui traverse perpendiculairement la plaque d'extrémité et qui coïncide avec l'axe longitudinal de la pile (1), l'emplacement (54) d'application des forces étant situé sur l'axe de symétrie (52) et les bordures de l'écran s'étendant à la périphérie de la plaque d'extrémité et étant stabilisées par un élément de traction configuré comme anneau de serrage (56) et agissant sur les bordures.

6. Plaque d'extrémité selon l'une ou plusieurs des revendications 1 à 5, **caractérisée en ce qu'**elle est réalisée en deux pièces constituées d'une plaque de poussée (20) et d'une plaque de pose (30), la plaque de poussée (20) présentant le ou les emplacements (24) d'application des forces de serrage de la pile (1) ainsi que l'écran de poussée (21), la plaque de poussée (20) et la plaque de pose (30) étant configurées pour coopérer de manière fiable en correspondance mécanique et/ou en correspondance géométrique.

7. Plaque d'extrémité rectangulaire selon l'une ou plusieurs des revendications 1 à 6, pour une pile de cellules à combustible (2) de section transversale rectangulaire, **caractérisée en ce que** l'écran de poussée (21) n'est cintré que dans une direction et présente des lignes d'enveloppe parallèles l'une à l'autre ainsi qu'à deux bordures opposées (23) de la plaque d'extrémité, les bordures correspondantes (23) de la plaque d'extrémité et de l'écran (21) coïncidant l'une avec l'autre et présentant les emplacements (24) d'application de forces.

8. Plaque d'extrémité rectangulaire selon la revendication 7, **caractérisée en ce que** l'élément de traction et de stabilisation relie l'une à l'autre les bordures (23) de l'écran et est de préférence configuré comme plaque de traction (22) qui s'étend sur toute la longueur des bordures qu'il relie.

9. Plaque d'extrémité rectangulaire selon l'une des revendications 7 ou 8, **caractérisée en ce que** la plaque de poussée (20) est configurée comme profilé extrudé à section transversale essentiellement en D et de préférence en aluminium.

10. Plaque d'extrémité selon l'une des revendications 5 à 9, **caractérisée en ce que** les courbures des surfaces de l'écran (21) et de la plaque de pose (30) qui coopèrent l'une avec l'autre se distinguent de manière prédéterminée, la surface active de l'écran (21) ayant une courbure plus forte que la surface correspondante de la plaque de pose (30), de telle sorte que la surface active de l'écran (21) peut être repoussée sous la charge de fonctionnement de manière à s'évaser de manière prédéterminée et uniformément définie contre toute la surface correspondante de la plaque de pose (30).

11. Plaque d'extrémité selon l'une des revendications 1 à 10, **caractérisée en ce que** les autres moyens présentent des canaux pour le passage d'un fluide.

12. Plaque d'extrémité selon l'une des revendications 1 à 11, **caractérisée en ce que** l'écran de poussée (21) a une structure segmentée.

13. Plaque de poussée pour une pile de cellules à combustible (2), destinée à coopérer de manière fiable avec une plaque de pose (30), **caractérisée par** au moins un emplacement (24, 54) d'application des forces de serrage de la pile (1) et par un écran de poussée (21) qui s'étend essentiellement sur toute sa surface, relié de manière fiable à l'emplacement ou aux emplacements (24, 54) d'application de forces et cintré dans au moins une direction vers une plaque de pose (30), ainsi que par des moyens de stabilisation prédéterminée de la courbure de l'écran en charge.

14. Plaque de pose pour la plaque de poussée d'une pile de cellules à combustible, **caractérisée par** des nervures de poussée (31) destinées à reprendre la charge de fonctionnement d'un écran de poussée (21) par pose de leur surface extérieure (34) contre la courbure de l'écran et par une surface de pose plane non tournée vers les côtés extérieurs des nervures de poussée (31) et destinée à s'appuyer sur un élément adjacent de la pile de cellules à combustible.

15. Plaque de pose selon la revendication 14, **caractérisée par** des canaux (33) pour le passage des fluides d'une pile de cellules à combustible.
